# EUROPÄISCHE PATENTSCHRIFT

(11) **EP 2 129 933 B1**
(45) Veröffentlichungstag und Bekanntmachung des Hinweises auf die Patenterteilung: **21.12.2011**
(21) Anmeldenummer: 08709095.7
(22) Anmeldetag: 19.02.2008
(51) Int. Cl.: F16F 15/08, H02K 5/24

(54) **TRÄGER ZUR HALTERUNG EINES SCHWINGUNGSERZEUGENDEN BAUTEILS**
CARRIER FOR HOLDING A VIBRATION-PRODUCING COMPONENT
SUPPORT DE FIXATION D'UN COMPOSANT PRODUISANT DES VIBRATIONS

(30) Priorität: 28.02.2007 DE 102007009903
(43) Veröffentlichungstag der Anmeldung: 09.12.2009
(73) Patentinhaber: BSH Bosch und Siemens Hausgeräte GmbH, 81739 München (DE)
(72) Erfinder: ANDREJCO, Rastislav, 09301 Vranov Nad Toplou (SK); ZVADA, Daniel, 81671 München (DE); FEINAUER, Adolf, 89537 Giengen (DE)
(86) Internationale Anmeldenummer: PCT/EP2008/051990
(87) Internationale Veröffentlichungsnummer: WO 2008/104480

(56) Entgegenhaltungen:
- US-A- 3 270 222
- US-A- 3 330 515
- US-A- 6 069 423
- US-A1- 2001 017 435

## Beschreibung

Die Erfindung bezieht sich auf eine Träger zur Halterung eines Bauteils in Form eines Elektromotors an einer Gerätewand, wobei das Bauteil mechanische Schwingungen erzeugt, welche Körperschallwellen in Körpern hervorrufen, die mit dem Bauteil in mechanischem Kontakt stehen, und wobei der Träger Befestigungselemente aufweist, mit denen der Träger an der Gerätewand befestigbar ist.

In verschiedenen Geräten, insbesondere Haushaltsgeräten, werden schwingende oder schwingungserzeugende Bauteile eingesetzt, wie beispielsweise Elektromotoren oder Transformatoren. Dabei kommt es zu einer direkten Anbindung von schwingenden Bauteilen an Flächen des Gerätes. Dadurch werden diese Flächen ihrerseits zu Schwingungen angeregt, wodurch Schallwellen in die Umgebung abgestrahlt werden, die sich als Geräusch bemerkbar machen können.

Aus Dokument US-A-3 270 222 ist ein Träger zur Halterung eines Elektromotors an einer Gerätewand bekannt, wobei der Elektromotor mechanische Schwingungen erzeugt, welche Körperschallwellen in Körpern hervorrufen können, die mit dem Elektromotor in mechanischem Kontakt stehen. Der Träger ist rahmenförmig ausgebildet und umrahmt den Elektromotor, so dass der Elektormotor in dem Träger in einem Abstand zur Gerätewand gehaltert wird und nur über den Träger mit der Gerätewand in mechanischem Kontakt steht.

Der vorliegenden Erfindung liegt die Aufgabe zugrunde, Geräusche bei Geräten zu reduzieren, die ein schwingungserzeugendes Bauteil in Form eines Elektromotors aufweisen.

Gelöst wird die vorstehend aufgezeigte Aufgabe durch einen Träger zur Halterung eines Elektromotors an einer Gerätewand, wobei der Elektromotor mechanische Schwingungen erzeugt, mit den Merkmalen des Anspruchs 1. Vorteilhafte sowie bevorzugte Ausgestaltungen der Erfindung sind Gegenstand der abhängigen Ansprüche.

Bei einem Träger der eingangs genannten Art, ist erfindungsgemäß der Elektromotor als Bauteil, das mechanische Schwingungen erzeugt, in dem Träger derart in einem Abstand zu der Gerätewand halterbar, dass das Bauteil nur über den Träger mit der Gerätewand in mechanischem Kontakt steht. Auf diese Weise sind Körperschallwellen von Körpern, die mit dem Bauteil in mechanischem Kontakt stehen, nur über den Träger in die Gerätewand einkoppelbar, so dass die Übertragung von Körperschallwellen in die Gerätewand durch eine entsprechende Gestaltung des Trägers reduzierbar ist. Eine direkte Anregung von Körperschallwellen in der Gerätewand durch das Bauteil wird vermieden. Es wird hier unter dem Begriff Gerätewand jede Art Wand verstanden, die zu einem Gerät gehört, wie z.B. Innenwände, Außenwände, Trennwände, Gehäuse aber auch Wände von anderen Bauteilen, die Teil des Gerätes sind.

Da das schwingungserzeugende Bauteil nur über den Träger in mechanischen Kontakt mit der Gerätewand steht, kann der Träger selbst und/oder eine Halterung des Bauteils in dem Träger derart ausgestaltet werden, dass die Anregung von Körperschallwellen in dem Träger und/oder die Übertragung von Körperschallwellen durch den Träger zu der Gerätewand und/oder die Einkopplung der Körperschallwellen des Trägers in die Gerätewand gezielt beeinflusst wird, so dass insgesamt die Anregung von Schwingungen in den mit dem Bauteil in mechanischem Kontakt stehenden Körpern gegenüber dem bisherigen Stand der Technik verringert wird. Insbesondere kann somit durch den Träger die Anregung von Schwingungen bzw. Körperschallwellen in der Gerätewand reduziert werden. Vor allem in den Fällen in denen die Abmessungen des Trägers kleiner als die Wellenlängen der von dem Bauteil erzeugten Schwingungen gewählt werden können, bewirkt der Träger eine Dämpfung dieser Schwingungen. Dies hat den Vorteil, dass eine Reduzierung der Körperschallübertragung von dem schwingungserzeugenden Bauteil bis zu der Gerätewand durch die Gestaltung des Trägers kostengünstig umgesetzt werden kann. Kostenintensive zusätzliche Dämpfungsmaßnahmen können somit eingespart werden.

Die durch die Körperschallwellen des Trägers hervorgerufenen Schwingungen der Gerätewand führen zu einer Schallabstrahlung in die Umgebung, die auch im hörbaren Bereich liegen kann. Gemäß einer bevorzugten Ausführungsform sind abhängig von den Schwingungen des Bauteils Schwingungsmoden des Trägers durch seine Abmessungen und/oder sein Material derart angepasst, so dass ausgewählte Frequenzen der Körperschallwellen in dem Träger gedämpft werden. Auf diese Weise können gezielt Körperschallwellen derjenigen Frequenzen reduziert werden, deren Schallabstrahlung von dem Träger als besonders unangenehmes Geräusch empfunden wird und/oder die die Gerätewand zu Schwingungen anregen, wobei wiederum deren Schallabstrahlung als besonders unangenehmes Geräusch empfunden wird. Insbesondere können durch die Abmessungen des Trägers und/oder die Wahl seines Materials Körperschallwellen mit solchen Frequenzen gedämpft werden, die Resonanzfrequenzen der Gerätewand entsprechen. D.h. in dem gesamten Schwingungssystem, das das schwingungserzeugende Bauteil, den Träger und die Gerätewand umfasst, können durch entsprechende Ausgestaltung des Trägers gezielt ausgewählte Frequenzen der Körperschallwellen beeinflusst, insbesondere gedämpft, werden. Dies führt insgesamt zu einer Reduzierung des Geräuschpegels des entsprechenden Gerätes.

Vorzugsweise sind die Befestigungselemente derart ausgebildet und/oder an dem Träger angeordnet, dass die Körperschallwellen des Trägers an einer vorgegebenen Position der Gerätewand in die Gerätewand einkoppelbar sind, so dass ausgewählte Frequenzen von Körperschallwellen bzw. Schwingungsmoden in der Gerätewand gedämpft sind. In der Regel weist die Gerätewand bevorzugte Bereiche auf, in denen sie schlechter zu Schwingungen anregbar ist als in anderen Bereichen, da sie in diesen bevorzugten Bereichen beispielsweise eine höhere Steifigkeit aufweist als in den anderen Bereichen. Daher kann das Gerätegeräusch dadurch reduziert werden, in dem der Träger mit seinen Befestigungselementen in diesen bevorzugten Bereichen befestigt wird, so dass die Körperschallwellen des Trägers bei Einkopplung in die Gerätewand in Schwingungen geringerer Amplitude umgesetzt werden als in anderen Bereichen.

Insbesondere sind die Befestigungselemente derart angeordnet, dass die Körperschallwellen in die Gerätewand nur versetzt zu einer Mittenposition der Gerätewand in die Gerätewand einkoppelbar sind. Da im Allgemeinen die Gerätewand besonders gut in ihrer Mitte zu Schwingungen angeregt werden kann, wird die Einkopplung der Körperschallwellen des Trägers an dieser Position vermieden.

Es ist auch möglich, die Form der Befestigungselemente derart auszugestalten oder an den Träger derart anzuformen, dass sie zur Dämpfung zumindest bestimmter Frequenzen der Körperschallwellen des Trägers vor der Einkopplung in die Gerätewand beitragen. Vorzugsweise sind die Abmessung der Befestigungselemente daher kleiner gewählt als die Wellenlängen der Körperschallwellen des Trägers.

Erfindungsgemäß ist der Träger derart rahmenförmig ausgebildet, dass er das Bauteil zumindest teilweise umrahmt. Erfindungsgemäß ist der Träger als rechteckförmiger Rahmen mit einer ersten und einer zweiten Rippe und mit zwei die beiden Rippen jeweils miteinander verbindenden Verbindungsstücken ausgebildet, wobei die erste und die zweite Rippe des Rahmens für eine Anordnung parallel zu der Gerätewand vorgesehen sind, derart dass die erste Rippe zwischen der zweiten Rippe und der Gerätewand angeordnet ist. Auf diese Weise kann das Bauteil in dem Träger von zumindest zwei Seiten gehaltert werden, so dass das Bauteil in dem Träger stabil fixiert ist und der Träger kann zusätzlich Material sparend ausgeführt werden.

Erfindungsgemäß erstrecken sich die beiden Verbindungsstücke über die erste Rippe hinaus in Richtung auf die Gerätewand hin und bestimmen somit den Abstand der ersten Rippe zu der Gerätewand. Die erste und die zweite Rippe sind zur Halterung des Bauteils ausgebildet. Auf diese Weise kann der Träger mit den beiden Verbindungsstücken in montiertem Zustand an der Gerätewand anliegen und das Bauteil ist zwischen der ersten und der zweiten Rippe des Trägers in einem Abstand zu der Gerätewand gehaltert, so dass die Schwingungen des Bauteils nicht direkt in die Gerätewand einkoppeln können. Zusätzlich hat diese Art der Befestigung des Bauteils an der Gerätewand den Vorteil, dass sie tolerant gegenüber eventuell auftretenden Ungenauigkeiten im Herstellungsprozess des Gerätes ist.

Erfindungsgemäß sind an den beiden Verbindungsstücken auch die Befestigungselemente zur Befestigung des Trägers an der Gerätewand angeordnet, insbesondere angeformt. Als besonders günstig hat es sich erwiesen, dass der Träger nur mit diesen Befestigungselementen an der Gerätewand anliegt, so dass der Körperschall des Trägers nur über die Befestigungselemente in die Gerätewand einkoppeln kann und daher die Befestigungselemente zur Dämpfung des in die Gerätewand einkoppelbaren Körperschalls beitragen können.

Vorzugsweise ist der Träger einteilig ausgebildet. Dadurch ist er besonders kostengünstig herstellbar. Beispielsweise ist der Träger aus Kunststoff als Spritzgussteil gefertigt. Insbesondere sind auch die Befestigungselemente an dem Träger einteilig angeformt. Der Träger kann einfach an die Gerätewand montiert werden, in dem der Träger mit den Befestigungselementen an der Gerätewand verrastbar und/oder verklebbar und/oder verschraubbar ist. Es ist alternativ dazu auch möglich den Träger einteilig mit der Gerätewand auszubilden, beispielsweise wird die Gerätewand mit dem Träger aus Kunststoff als Spritzgussteil gefertigt.

Der erfindungsgemäße Träger kann zur Halterung von Elektromotoren verwendet werden. Insbesondere wird der Träger zur Halterung eines Antriebsmotors bei einer anzutreibenden Einheit, wie beispielsweise einem Lüfter, einem Gebläse oder einer Pumpe eingesetzt. In diesem Fall kann die Gerätewand dieser anzutreibenden Einheit zugeordnet sein und ist beispielsweise eine Gehäusewand, insbesondere eines Lüfter- oder Hydraulikgehäuses.

Generell können bei verschiedensten Geräten, insbesondere bei Haushaltsgeräten, durch Verwendung des erfindungsgemäßen Trägers Geräusche reduziert werden. Eine Pumpe mit dem erfindungsgemäßen Träger kann beispielsweise bei einer Waschmaschine oder einer Geschirrspülmaschine eingesetzt werden. Ein Lüfter oder ein Gebläse mit dem erfindungsgemäßen Träger findet z.B. bei einem Kältegerät oder einem Staubsauger Verwendung. Auch die von einem Kompressor bei einem Kältegerät hervorgerufenen Geräusche können durch den erfindungsgemäßen Träger reduziert werden.

Es wird darauf hingewiesen, dass die Merkmale der Unteransprüche ohne Abweichung von der erfindungsgemäßen Idee in beliebiger Weise miteinander und mit den Merkmalen des bzw. der unabhängigen Ansprüche kombinierbar sind.

Ausführungsbeispiele der Erfindung werden nachstehend anhand der Zeichnung näher erläutert.
- Fig. 1: zeigt eine schematische Schnittansicht durch einen Lüfter mit einer Halterung eines Antriebsmotors gemäß dem Stand der Technik,
- Fig. 2: zeigt eine schematische Schnittansicht durch einen Lüfter mit einem Träger eines Antriebsmotors gemäß einem erfindungsgemäßen Ausführungsbeispiel,
- Fig. 3: zeigt eine Ansicht schräg von oben auf den Träger gemäß Figur 2,
- Fig. 4: zeigt eine Detailansicht des Trägers mit seinen Befestigungselemente gemäß einer ersten Ausführungsform,
- Fig. 5: zeigt eine Detailansicht des Trägers mit seinen Befestigungselemente gemäß einer zweiten Ausführungsform.

Bevor auf die Zeichnungen näher eingegangen wird, sei angemerkt, dass einander entsprechende oder gleiche Elemente bzw. Einzelteile in den Zeichnungsfiguren durch gleiche Bezugszeichen bezeichnet sind.

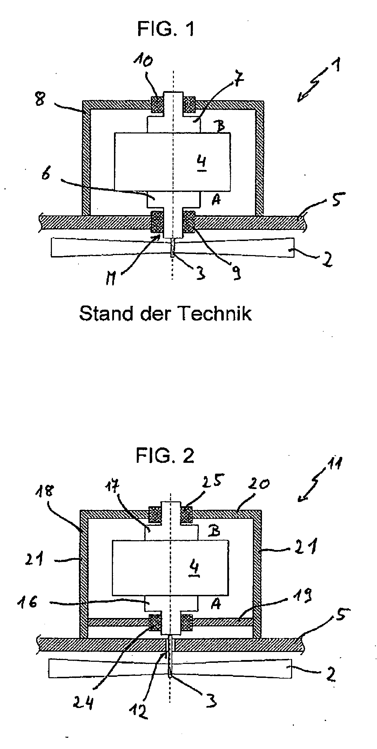

In Fig. 1 ist ein schematischer Querschnitt durch einen Lüfter 1 gemäß dem Stand der Technik gezeigt. Der Lüfter 1 weist ein Laufrad 2 auf, welches im Betrieb über eine Welle 3 von einem Elektromotor 4 angetrieben wird. Des weiteren weist der Lüfter 1 ein Lüftergehäuse mit einer Gehäusewand 5 auf, die hier nur in einem Ausschnitt gezeigt ist. Diese Gehäusewand 5 ist zwischen dem Laufrad 2 und dem Elektromotor 4 angeordnet, so dass sich die gemeinsame Welle 3 des Elektromotors 4 und des Laufrads 2 durch eine Öffnung der Gehäusewand 5 hindurch erstreckt. Der Elektromotor 4 ist antriebsseitig, also mit seiner dem Laufrad 2 zugewandten A-Seite, mit Hilfe eines ersten Montageelements 6 in der Mitte M der Gehäusewand 5 befestigt, wobei sich die Welle 3 durch das erste Montageelement 6 hindurch erstreckt. D.h. der Elektromotor 4 steht über das erste Montageelement 6 in einem direkten mechanischen Kontakt mit der Mitte M der Gehäusewand 5, über den Schwingungen des Elektromotors 4 in die Gehäusewand 5 übertragen werden können. Mit seiner der A-Seite gegenüberliegenden B-Seite ist der Elektromotor 4 mit Hilfe eines zweiten Montageelements 7 in einem Halter 8 befestigt, der seinerseits wiederum an der Gehäusewand 5 fixiert ist. Um nun die von dem Elektromotor 4 im Betrieb erzeugten Schwingungen zu dämpfen, ist zwischen dem ersten Montageelement 6 und der Gehäusewand ein erstes Dämpfungselement 9 und zwischen dem zweiten Montageelement 7 und dem Halter 8 ein zweites Dämpfungselement 10 angeordnet. Das erste Dämpfungselement 9 dämpft zwar die Schwingungen des Elektromotors 4, lässt aber trotzdem noch einen Anteil der Schwingungen durch, die in die Mitte M der Gehäusewand 5 einkoppeln. Dadurch wird die Gehäusewand 5 ihrerseits zu Schwingungen angeregt, was mit einer Geräuschabstrahlung verbunden ist.

In Fig. 2 ist ein schematischer Querschnitt durch einen Lüfter 11 gemäß einem Ausführungsbeispiel der Erfindung gezeigt. Auch dieser Lüfter 11 weist ein Laufrad 2 auf, welches im Betrieb über eine Welle 3 von einem Elektromotor 4 angetrieben wird. Des weiteren weist der Lüfter 11 auch ein Lüftergehäuse mit einer Gehäusewand 5 auf, die hier nur in einem Ausschnitt gezeigt ist. Diese Gehäusewand 5 ist zwischen dem Laufrad 2 und dem Elektromotor 4 angeordnet, so dass sich die gemeinsame Welle 3 des Elektromotors 4 und des Laufrads 2 durch eine Öffnung 12 der Gehäusewand 5 hindurch erstreckt. Dabei ist die Öffnung 12 derart weit ausgebildet, dass die Welle 3 auch bei Betrieb des Elektromotors 4 mit der Gehäusewand 5 nicht in Berührung kommt. Der Elektromotor 4 ist in einem Träger 18 gehaltert, der im Folgenden genauer beschrieben wird.

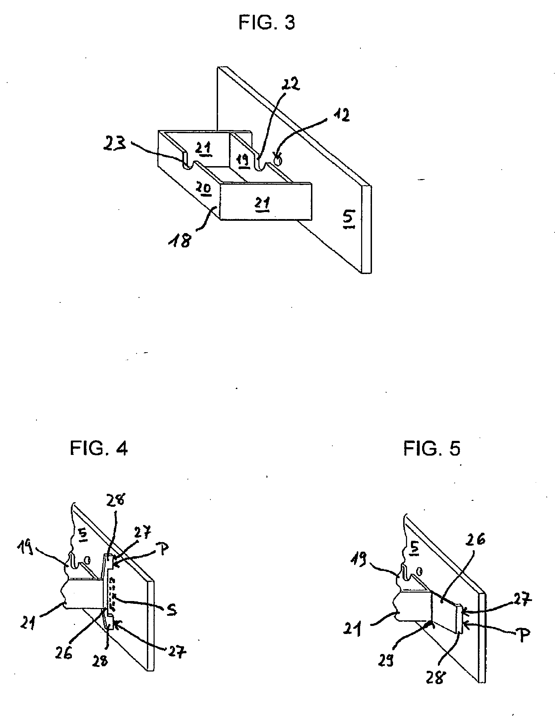

In Fig. 3 ist der an der Gehäusewand 5 montierte Träger 18 ohne den Elektromotor 4 in einer perspektivischen Ansicht gezeigt. Der Träger 18 weist eine erste Rippe 19 und eine zweite Rippe 20 auf, die jeweils durch zwei Verbindungsstücken 21 miteinander verbunden sind und zusammen einen rechteckförmigen Rahmen bilden. Die erste Rippe 19 und die zweite Rippe 20 des Trägers 18 sind parallel zu der Gehäusewand 5 angeordnet, wobei die erste Rippe 19 zwischen der zweiten Rippe 20 und der Gehäusewand 5 liegt. Die beiden Verbindungsstücke 21 sind über die erste Rippe 19 hinaus in Richtung auf die Gehäusewand 5 hin verlängert und bestimmen den Abstand der ersten Rippe 19 und somit des Elektromotors 4 zu der Gehäusewand 5. Der Elektromotor 4 ist antriebsseitig, also mit seiner dem Laufrad 2 zugewandten A-Seite, mit Hilfe eines ersten Montageelements 16 in einer Aufnahme 22 in der Mitte der ersten Rippe 19 des Trägers 18 befestigt, wobei sich die Welle 3 durch das erste Montageelement 16 hindurch erstreckt. Mit seiner der A-Seite gegenüberliegenden B-Seite ist der Elektromotor 4 mit Hilfe eines zweiten Montageelements 17 in einer Aufnahme 23 der zweiten Rippe 20 des Trägers 18 befestigt. Der Träger 18 ist seinerseits mit den beiden Verbindungsstücken 21 außerhalb der Mittenposition M an der Gehäusewand fixiert, so dass eine Schwingungsanregung der Gehäusewand 5 an der Mittenposition M vermieden wird, und etwaiger Körperschall des Trägers 18 in Bereiche der Gehäusewand 5 eingeleitet wird, die schwerer zu Schwingungen anregbar sind als die Mitte M der Gehäusewand 5.

Das heißt der Elektromotor 4 ist zusammen mit seinen Montageelementen 16, 17 vollständig in dem Träger 18 in einem Abstand zu der Gehäusewand 5 gehaltert, so dass der Elektromotor 4 nur über den Träger 18 in mechanischem Kontakt zu der Gehäusewand 5 steht. Die Abmessungen und das Material der ersten Rippe 19, der zweiten Rippe 20 und der Verbindungsstücke 21 ist so gewählt, dass das Schwingungssystem, das aus dem Elektromotor 4, dem Träger 18 und der Gehäusewand 5 besteht, möglichst wenig störendes Geräusch abstrahlt. Um eine Anregung von Körperschallwellen bzw. Schwingungen des Trägers 18 durch die von dem Elektromotor 4 im Betrieb erzeugten Schwingungen möglichst gering zu halten, ist zusätzlich zwischen dem ersten Montageelement 16 und der ersten Rippe 19 ein erstes Dämpfungselement 24 und zwischen dem zweiten Montageelement 17 und der zweiten Rippe 20 ein zweites Dämpfungselement 25 angeordnet.

Da nun das A-seitige Montageelementen 16 und das zugehörige Dämpfungselemente 24 in der ersten Rippe 19 montiert werden und nicht in der Gehäusewand 5, wie in dem in Fig. 1 gezeigten Stand der Technik, kann die Öffnung 12 in der Gehäusewand 5 im Vergleich zu dem Stand der Technik wesentlich kleiner ausgebildet werden. D.h. es genügt die Öffnung 12 derart weit auszubilden, dass die Welle 3 auch bei Betrieb des Elektromotors 4 mit der Gehäusewand 5 nicht in Berührung kommt, und dass die Welle 3 bei der Montage des Elektromotors 4 an der Gehäusewand 5 durch die Öffnung 12 gesteckt werden kann. Beispielsweise ist die Öffnung 12 als Langloch ausgebildet, mit einer Breite von 4 Millimetern und einer Länge von 10 Millimetern. Die geringe Ausdehnung der Öffnung 12 hat gegenüber dem Stand der Technik den Vorteil, dass sich für die von dem Laufrad 2 erzeugten Luftströmungen die Strömungsverhältnisse verbessern. Dies führt wiederum zu einer Reduzierung eines von dem Laufrad 2 abgestrahlten Luftschallgeräusches.

In Fig. 4 und 5 sind zwei Ausführungsformen für Befestigungselemente 26 gezeigt, mit denen der Träger 18 an der Gehäusewand 5 befestigt ist. Die Befestigungselemente 26 weisen Ankoppelflächen 27 auf, mit denen sie an der Gehäusewand 5 anliegen, und über die der Körperschall des Trägers 18 an vorgegebenen Positionen P in die Gehäusewand 5 einkoppeln kann. Je nach Ausgestaltung und Anordnung der Befestigungselemente 26 an dem Träger 18 kann die Position P der Kräfteeinleitung von den Körperschallwellen des Trägers 18 in die Gehäusewand 5 variiert werden. Es sind allerdings auch andere Ausgestaltungen und Anordnungen der Befestigungselemente 26 als bei den beiden in Fig. 4 und Fig. 5 gezeigten Beispielen möglich.

In Fig. 4 ist an die der Gehäusewand 5 zugewandte Stirnfläche des Verbindungsstücks 21 ein Befestigungselement 26 in Form eines Steges angeformt, der sich senkrecht zu der Erstreckungsrichtung der ersten Rippe 19 über diese Stirnfläche des Verbindungsstücks 21 hinaus erstreckt und der an seinen beiden Enden jeweils in einen Standfuß 28 mündet, mit dem der Träger 18 jeweils an der Gehäusewand 5 befestigt ist. D.h. der Träger 18 liegt nur mit den Ankoppelflächen 27 der Standfüße 28, die parallel versetzt zu der ersten Rippe 19 sind, an der Gerätewand 5 an, die sich außerhalb einer senkrechten Projektion S der Stirnfläche des Verbindungsstücks 21 auf die Gehäusewand 5 aber in einer Ebene mit dem Verbindungsstück 21 befinden.

In Fig. 5 ist ein Befestigungselement 26 in Form eines Auslegers gezeigt, der sich von einer durch das Verbindungsstück 21 und durch die erste Rippe 19 gebildete Kante 29 schräg in Richtung auf die Gehäusewand 5 hin erstreckt und in einem Standfuß 28 mündet, mit dem das Befestigungselement 26 und damit der Träger 18 an der Gehäusewand 5 anliegt. Der Standfuß 28 ist mit seiner Ankoppelfläche 27 parallel versetzt zu der Ebene angeordnet, in der das Verbindungsstück 21 liegt.

### Bezugszeichenliste

- 1: Lüfter gemäß dem Stand der Technik
- 2: Laufrad
- 3: Welle
- 4: Elektromotor
- 5: Gehäusewand
- 6: erstes Montageelement -
- 7: zweites Montageelement
- 8: Halter
- 9: erstes Dämpfungselement
- 10: zweites Dämpfungselement
- 11: Lüfter gemäß einem Ausführungsbeispiel der Erfindung
- 12: Öffnung in der Gehäusewand
- 16: erstes Montageelement
- 17: zweites Montageelement
- 18: Träger
- 19: erste Rippe des Trägers
- 20: zweite Rippe des Trägers
- 21: Verbindungsstück zwischen erster und zweiter Rippe
- 22: Aufnahme für das erste Montageelement
- 23: Aufnahme für das zweite Montageelement
- 24: erstes Dämpfungselement
- 25: zweites Dämpfungselement
- 26: Befestigungselement
- 27: Ankoppelfläche
- 28: Standfuß
- 29: Kante von erster Rippe und Verbindungsstück
- A: A-Seite des Elektromotors
- B: B-Seite des Elektromotors
- M: Mittenposition der Gehäusewand
- P: vorgegebene Position der Gehäusewand
- S: senkrechte Projektion des Verbindungsstücks auf die Gerätewand

## Patentansprüche

1. Träger zur Halterung eines Elektromotors (4) an einer Gerätewand (5), wobei der Elektromotor (4) mechanische Schwingungen erzeugt, welche Körperschallwellen in Körpern (5, 6, 7, 8, 9, 10, 16, 17, 18, 24, 25) hervorrufen, die mit dem Elektromotor (4) in mechanischem Kontakt stehen, wobei der Träger (18) Befestigungselemente (26) aufweist, mit denen der Träger (18) an der Gerätewand (5) befestigbar ist, wobei der Träger (18) derart rahmenförmig ausgebildet ist, dass er den Elektromotor (4) zumindest teilweise umrahmt, und wobei der Elektromotor (4) in dem Träger (18) derart in einem Abstand zu der Gerätewand (5) halterbar ist, dass der Elektromotor (4) nur über den Träger (18) mit der Gerätewand (5) in mechanischem Kontakt steht, **dadurch gekennzeichnet, dass** der Träger (18) als rechteckförmiger Rahmen mit einer ersten Rippe (19) und einer zweiten Rippe (20) und mit zwei die beiden Rippen (19, 20) jeweils miteinander verbindenden Verbindungsstücken (21) ausgebildet ist, und dass die erste Rippe (19) und die zweite Rippe (20) des Rahmens für eine Anordnung parallel zu der Gerätewand (5) vorgesehen sind, derart dass die erste Rippe (19) zwischen der zweiten Rippe (20) und der Gerätewand (5) angeordnet ist, dass sich die beiden Verbindungsstücke (21) über die erste Rippe (19) hinaus in Richtung auf die Gerätewand (5) hin erstrecken und den Abstand der ersten Rippe (19) zu der Gerätewand (5) bestimmen, dass die erste Rippe (19) und die zweite Rippe (20) zur Halterung des Elektromotors (4) ausgebildet sind, und dass an den beiden Verbindungsstücken (21) die Befestigungselemente (26) zur Befestigung des Trägers (18) an der Gerätewand (5) angeordnet, insbesondere angeformt, sind, so dass der Träger (18) im montierten Zustand nur mit den Befestigungselementen (26) an der Gerätewand (5) anliegt und der Elektromotor (4) zwischen der ersten Rippe (19) und der zweiten Rippe (20) gehaltert ist.

2. Träger nach Anspruch 1, **dadurch gekennzeichnet, dass** abhängig von den Schwingungen des Elektromotors (4) Schwingungsmoden des Trägers (18) durch seine Abmessungen und/oder sein Material derart angepasst sind, so dass ausgewählte Frequenzen der Körperschallwellen in dem Träger (18) gedämpft werden.

3. Träger nach Anspruch 1 oder 2, **dadurch gekennzeichnet, dass** die Befestigungselemente (26) derart ausgebildet und/oder an dem Träger (18) angeordnet sind, dass die Körperschallwellen des Trägers (18) an einer vorgegebenen Position (P) der Gerätewand (5) in die Gerätewand (5) einkoppelbar sind, so dass ausgewählte Frequenzen von Körperschallwellen bzw. Schwingungsmoden in der Gerätewand (5) gedämpft sind.

4. Träger nach einem der vorhergehenden Ansprüche, **dadurch gekennzeichnet, dass** die Befestigungselemente (26) derart angeordnet sind, dass die Körperschallwellen in die Gerätewand (5) nur versetzt zu einer Mittenposition (M) der Gerätewand (5) in die Gerätewand (5) einkoppelbar sind.

5. Träger nach einem der vorhergehenden Ansprüche, **dadurch gekennzeichnet, dass** der Träger (18) einteilig ausgebildet ist.

6. Träger nach einem der vorhergehenden Ansprüche, **dadurch gekennzeichnet, dass** die Befestigungselemente (26) an dem Träger (18) einteilig angeformt sind.

7. Träger nach einem der vorhergehenden Ansprüche, **dadurch gekennzeichnet, dass** der Träger (18) mit den Befestigungselementen (26) an der Gerätewand (5) verrastbar und/oder verklebbar und/oder verschraubbar ist.

8. Träger nach einem der Ansprüche 1 bis 6, **dadurch gekennzeichnet, dass** der Träger (18) mit der Gerätewand (5) einteilig ausgebildet ist.

9. Gerätewand mit einem Träger nach einem der Ansprüche 1 bis 8, **dadurch gekennzeichnet, dass** die Gerätewand (5) einer anzutreibenden Einheit (2) zugeordnet ist.

10. Gerätewand nach Anspruch 8, **dadurch gekennzeichnet, dass** die Gerätewand (5) eine Gehäusewand ist, insbesondere eines Lüfter- oder Hydraulikgehäuses..

11. Lüfter, insbesondere für ein Haushaltsgerät, mit einem Träger (18) nach einem der Ansprüche 1 bis 8 und einem in dem Träger (18) gehalterten Elektromotor (4), **dadurch gekennzeichnet, dass** die Gerätewand (5) eine Wand eines Lüftergehäuses ist.

12. Pumpe, insbesondere für ein Haushaltsgerät, mit einem Träger (18) nach einem der Ansprüche 1 bis 8 und einem in dem Träger (18) gehalterten Elektromotor (4), **dadurch gekennzeichnet, dass** die Gerätewand (5) eine Wand eines Hydraulikgehäuses ist.

13. Haushaltsgerät mit einem Lüfter (11) nach Anspruch 11 oder einer Pumpe nach Anspruch 12.

## Claims

1. Support for mounting an electric motor (4) at an appliance wall (5), wherein the electric motor (4) produces mechanical vibrations which produce solid-body sound waves in bodies (5, 6, 7, 8, 9, 10, 16, 17, 18, 24, 25) in mechanical contact with the electric motor (4), wherein the support (18) comprises fastening elements (26) by which the support (18) is fastenable to the appliance wall (5), wherein the support (18) is constructed to be frame-shaped in such a manner that it at least partly frames the electric motor (4), and wherein the electric motor (4) is mountable in the support (18) at a spacing from the appliance wall (5) in such a manner that the electric motor (4) is in mechanical contact with the appliance wall (5) only by way of the support (18), **characterised in that** the support (18) is constructed as a rectangular frame with a first rib (19) and a second rib (20) and with two connecting members (21) respectively connecting the two ribs (19, 20) together, and that the first rib (19) and the second rib (20) of the frame are provided for an arrangement parallel to the appliance wall (5) in such a manner that the first rib (19) is arranged between the second rib (20) and the appliance wall (5), that the two connecting members (21) extend beyond the first rib (19) in direction towards the appliance wall (5) and define the spacing of the first rib (19) from the appliance wall (5), that the first rib (19) and the second rib (20) are constructed for mounting the electric motor (4) and that the fastening elements (26) for fastening the support (18) to the appliance wall (5) are arranged, particularly formed, at the two connecting members (21) so that the support (18) in the mounted state bears against the appliance wall (5) only by the fastening elements (26) and the electric motor (4) is mounted between the first rib (19) and the second rib (20).

2. Support according to claim 1, **characterised in that** depending on the vibrations of the electric motor (4) vibration modes of the support (18) are adapted in such a manner by the dimensions and/or material thereof that selected frequencies of the solid-borne sound waves are damped in the support (18).

3. Support according to claim 1 or 2, **characterised in that** the fastening elements (26) are so constructed and/or arranged at the support (18) that the solid-borne sound waves of the support (18) can be coupled into the appliance wall (5) at a predetermined position (P) of the appliance wall (5) so that selected frequencies of solid-borne sound waves or vibration modes are damped in the appliance wall.

4. Support according to any one of the preceding claims, **characterised in that** the fastening elements (26) are so arranged that the solid-borne sound waves in the appliance wall (5) can be coupled into the appliance wall (5) only offset with respect to a centre position (M) of the appliance wall (5).

5. Support according to any one of the preceding claims, **characterised in that** the support (18) is of integral construction.

6. Support according to any one of the preceding claims, **characterised in that** the fastening elements (26) are integrally formed at the support (18).

7. Support according to any one of the preceding claims, **characterised in that** the support (18) can be connected by the fastening elements (26) to the appliance wall (5) by detenting, glueing and/or screw-connecting.

8. Support according to any one of claims 1 to 6, **characterised in that** the support (18) is formed integrally with the appliance wall (5).

9. Appliance wall with a support according to any one of claims 1 to 8, **characterised in that** the appliance wall (5) is associated with a unit (2) to be driven.

10. Appliance wall according to claim 8, **characterised in that** the appliance wall (5) is a housing wall, particularly of a fan housing or hydraulic housing.

11. Fan, particularly for a domestic appliance, with a support (18) according to any one of claims 1 to 8 and an electric motor (4) mounted in the support (18), **characterised in that** the appliance wall (5) is a wall of a fan housing.

12. Pump, particularly for a domestic appliance, with a support (18) according to any one of claims 1 to 8 and an electric motor (4) mounted in the support (18), **characterised in that** the appliance wall (5) is a wall of a hydraulic system housing.

13. Domestic appliance with a fan (11) according to claim 11 or a pump according to claim 12.

## Revendications

1. Support de fixation d'un moteur électrique (4) sur une paroi d'appareil (5), le moteur électrique (4) produisant des vibrations mécaniques provoquant des ondes sonores de structure dans des corps (5, 6, 7, 8, 9, 10, 16, 17, 18, 24, 25) se trouvant en contact mécanique avec le moteur électrique (4), le support (18) présentant des éléments de fixation (26) permettant de fixer le support (18) sur la paroi d'appareil (5), le support (18) étant réalisé en forme de cadre, de telle manière qu'il encadre au moins partiellement le moteur électrique (4), et le moteur électrique (4) pouvant être fixé dans le support (18) à une distance par rapport à la paroi d'appareil (5), de telle manière que le moteur électrique (4) se trouve en contact mécanique avec la paroi d'appareil (5) uniquement via le support (18), **caractérisé en ce que** le support (18) est réalisé sous forme de cadre de forme rectangulaire comprenant une première nervure (19) et une deuxième nervure (20) et deux pièces de liaison (21) reliant chacune les deux nervures (19, 20) entre elles, et **en ce que** la première nervure (19) et la deuxième nervure (20) du cadre sont prévues pour être disposées parallèlement à la paroi d'appareil (5), de telle manière que la première nervure (19) soit disposée entre la deuxième nervure (20) et la paroi d'appareil (5), **en ce que** les deux pièces de liaison (21) s'étendent au-delà de la première nervure (19) en direction de la paroi d'appareil (5) et déterminent la distance de la première nervure (19) par rapport à la paroi d'appareil (5), **en ce que** la première nervure (19) et la deuxième nervure (20) sont conçues pour la fixation du moteur électrique (4), et **en ce que** sur les deux pièces de liaison (21) sont disposés, en particulier formés, les éléments de fixation (26) destinés à fixer le support (18) sur la paroi d'appareil (5), de telle sorte que le support (18), lorsqu'il est monté, est en appui sur la paroi d'appareil (5) uniquement avec les éléments de fixation (26) et le moteur électrique (4) est fixé entre la première nervure (19) et la deuxième nervure (20).

2. Support selon la revendication 1, **caractérisé en ce qu'**en fonction des vibrations du moteur électrique (4), des modes de vibration du support (18), de par les dimensions et/ou la matière de celui-ci, sont adaptés de telle manière que des fréquences sélectionnées des ondes sonores de structure dans le support (18) seront amorties.

3. Support selon la revendication 1 ou 2, **caractérisé en ce que** les éléments de fixation (26) sont réalisés et/ou disposés sur le support (18) de telle manière que les ondes sonores de structure du support (18) peuvent être injectées dans la paroi d'appareil (5) à une position prédéfinie (P) de la paroi d'appareil (5), de sorte que des fréquences sélectionnées d'ondes sonores de structure, respectivement de modes de vibration dans la paroi d'appareil (5) sont amorties.

4. Support selon l'une des revendications précédentes, **caractérisé en ce que** les éléments de fixation (26) sont disposés de telle manière que les ondes sonores de structure ne peuvent être injectées dans la paroi d'appareil (5) que de façon décalée par rapport à une position centrale (M) de la paroi d'appareil (5).

5. Support selon l'une des revendications précédentes, **caractérisé en ce que** le support (18) est réalisé d'une seule pièce.

6. Support selon l'une des revendications précédentes, **caractérisé en ce que** les éléments de fixation (26) sont formés d'une seule pièce sur le support (18).

7. Support selon l'une des revendications précédentes, **caractérisé en ce que** le support (18) peut être fixé sur la paroi d'appareil (5) à l'aide des éléments de fixation (26) par encliquetage et/ou collage et/ou vissage.

8. Support selon l'une des revendications 1 à 6, **caractérisé en ce que** le support (18) est réalisé d'une seule pièce avec la paroi d'appareil (5).

9. Paroi d'appareil dotée d'un support selon l'une des revendications 1 à 8, **caractérisée en ce que** la paroi d'appareil (5) est associée à une unité (2) à entraîner.

10. Paroi d'appareil selon la revendication 8, **caractérisée en ce que** la paroi d'appareil (5) est une paroi de carter, en particulier d'un carter de ventilateur ou hydraulique.

11. Ventilateur, en particulier pour un appareil ménager, doté d'un support (18) selon l'une des revendications 1 à 8 et d'un moteur électrique (4) fixé dans le support (18), **caractérisé en ce que** la paroi d'appareil (5) est une paroi d'un carter de ventilateur.

12. Pompe, en particulier pour un appareil ménager, dotée d'un support (18) selon l'une des revendications 1 à 8 et d'un moteur électrique (4) fixé dans le support (18), **caractérisé en ce que** la paroi d'appareil (5) est une paroi d'un carter hydraulique.

13. Appareil ménager doté d'un ventilateur (11) selon la revendication 11 ou d'une pompe selon la revendication 12.
